# EUROPEAN PATENT SPECIFICATION

(11) **EP 1 127 289 B1**
(45) Date of publication and mention of the grant of the patent: **13.07.2005**
(21) Application number: 99971522.0
(22) Date of filing: 21.10.1999
(51) Int. Cl.: G02C 1/02

(54) **Rimless Spectacles**
Rahmenlose Brille
Lunettes sans cerclage

(30) Priority: 04.11.1998 US 185847; 01.10.1999 US 411556
(43) Date of publication of application: 29.08.2001
(73) Proprietor: Microvision Optical, Inc., San Diego, CA 92111 (US)
(72) Inventor: CONNER, William, A., San Diego, CA 92109 (US); CONNER, Brian, N., San Diego, CA 92109 (US); KLINE, Daniel, S., Encinitas, CA 92024 (US)
(74) Representative: Gillam, Francis Cyril
(86) International application number: PCT/US1999/024789
(87) International publication number: WO 2000/026716

(56) References cited:
- EP-A- 0 661 575
- WO-A-98/19203
- US-A- 5 367 344
- US-A- 5 585 870
- US-A- 5 646 706
- US-A- 5 771 086
- US-A- 5 835 183

## Description

### BACKGROUND OF THE INVENTION

The invention is directed to rimless eye glasses (spectacles) and more specifically to means for fixedly attaching temple hinges and a bridge directly to the lens of the eye glasses, though the invention is also applicable to eye glasses having rims for the lenses but where the bridge and temple hinges are attached to the lenses.

United States Patent No. 4,550,898 issued to Hafner teaches the use of clamps and screws to attach the bridge and temple hinges to the lenses of rimless eye glasses.

United States Patent No. 5,073,020 issued to Lindberg et al. teaches elongated slits for attaching the bridge and temple hinges by 'U' shaped bent wire loop portions having a resilient expansion force (tension) on the outside surfaces of the 'U' shaped loop for maintaining the loops and associated bridge or temple hinge connection to the lenses. There is a disadvantage to this type of connection in that it can be easily disengaged from the lens as there is no locking mechanism to prevent up and down motion on the bridge and temples from loosening or disengaging the wire to lens connection.

United States Patent No. 5,450,141 issued to Kobayashi teaches temple hinge and nose piece attachment to rimless glasses by means of bolts passing through the lenses and nuts holding the bolts in place.

United States Patent No. 5,585,870 issued to Masunaga teaches bridge and temple hinge connections to the lenses of rimless eye glasses by a round wire formed into the bridge and temple hinges, each connected at three points on a lens of rimless glasses. The connections for the bridge and temple hinge are made with a 'U' shaped wire biased against the lens edge by tension provided by the end of the wire which is inserted into an aperture in the lens. The inserted ends of the wires have a polycarbonate buffer sleeve for preventing slackness between the lens aperture and the bridge and temple hinge ends. Even with the improvement of the sleeve over the inserted end of the wire there is a tendency for the wire to loosen and become dislodged from the lens and render the eye glasses useless for the purpose intended. The ends of the bridge and temple hinge wires are bent to bear against the edge of the lens at two locations, giving a three-point support. The bridge and temple hinge are held in place by the bent wire forming pressure between the lens aperture and at the two locations on the lens edge. This connection applies a greater stress in the lens material. This reference teaches a round wire, a cylindrical sleeve and a cylindrical lens aperture. The combination does not provide locking of the inserted ends of the temple hinge and bridge to the lens because of manufacturing tolerances in the lens aperture and sleeve bore.

United States Patent No. 5,646,706 issued to Izumitani teaches rimless eye glasses with apertures through the narrow vertical sides of the lens and with protrusions extending from the bridge and temple hinges inserted into the apertures and adhered thereto by adhesive means.

United States Patent No. 5,748,280 issued to Herman teaches a plurality of apertures through the lens of rimless glasses. Separate pairs of apertures are used to attach the temple and two pairs of apertures are used to attach the bridges.

United States Patent No. 5,367,344 issued to Fuchs discloses rimless glasses having a parallel pin and bushing arrangement for attaching two lenses to a single wire serving as the bridge and temple arms. One embodiment utilises protrusions on the pin to assist locking of the pin in the bushing.

There is a continuing need to improve the bridge and temple hinge attachment to the lenses of rimless eye glasses keeping in mind a single point connection between the lens and the temple hinge and bridge to keep the overall weight of the eye glasses low while providing a snug fit that cannot inadvertently become loosened or disengaged from the lens connection. The preferred embodiments of the instant invention are an advancement in this art.

### SUMMARY OF THE INVENTION

The invention is directed primarily to rimless eye glasses, and more specifically to the connection of a bridge and temple hinge to lenses of the eye glasses. This invention provides spectacles comprising two lenses each having two spaced apertures, two temple hinges, a bridge and bushings received in each of the apertures of the lenses, characterised in that said bridge and said temple hinges have tapered ends each received and frictionally locked in a respective one of said bushings.

The tapered end of the temple hinge and bndge inserted into the respective aperture in the eye glass lenses as well as those apertures can take many different general mating forms including frusto-conic, rectangular and triangular. The channel through the bushing should be shaped to conform to the tapered shape of the inserted end of the bridge and the temple hinge, i.e., the aperture through the bushing is frusto-conic, rectangular or triangular to conform with a like corifiguration of the inserted end of the bridge and temple hinge.

In another embodiment the bushing is split to accommodate the inserted end of the bridge or temple hinge into the lens aperture. In this embodiment the bushing stays attached to the inserted end of the bridge and temple hinge when removed therefrom.

The bridge and temple hinge can be attached to the lens through either surface of the lens, i.e., front or back surfaces, and can rely on only the aperture connection or can be formed to provide a biasing force between an aperture and the outer edge of the lens surface.

In another embodiment the side edge of the lens includes a notch engaged by a part of the bridge or temple hinge, to resist rotation of the bridge or temple hinge when inserted within the lens aperture.

The invention as disclosed in this application provides an improvement to rimless eye glasses by providing a more positive and secure connection between the lens and bridge and temple hinge and reduces the overall weight of the eye glasses.

The principal object of this invention is to provide a lightweight pair of rimless eye glasses.

Another object of this invention is to provide a single connection positive lock connection between the eye glass lens and the attached bridge (or nosepiece) and temple hinge.

The above and other objects, features and advantages of the present invention will become apparent from the following descriptions when taken in conjunction with the accompanying drawings that illustrate preferred embodiments of the present invention by way of example.

### BRIEF DESCRIPTION OF THE DRAWING FIGURES

Figure 1 is a perspective view showing a first embodiment of the invention employed on conventional rimless eye glasses with bridge and temple hinge attached through the outer surface of each eye glass lens;
Figure 2 is a side cutaway view showing a first embodiment of an inserted end of the bridge or temple hinge;
Figure 3 is a side cutaway view showing a first embodiment of a bushing used in the invention for placement between a bridge or temple hinge lens aperture and the inserted end of the bridge and temple hinge for attachment to the lens;
Figure 4 is a side cutaway view showing the inserted end of the temple hinge and bushing of Figures 2 and 3 inserted into a lens aperture for securement thereto;
Figures 5 to 7 depict various cross-sectional configurations of the inserted end of the bridge and temple hinge for attachment to the lens;
Figure 8 is a perspective view of a second embodiment of the invention employed on conventional rimless eye glasses with a bridge and temple hinge attached through the inner surface of each eye glass lens;
Figure 9 is a cutaway side view similar to Figure 4 but of the inner attachment of the bridge and temple hinge of Figure 8;
Figure 10 shows another embodiment of the invention where the bridge and temple hinge end is inserted into a lens aperture from the back of the lens with the bushing inserted from the front of the lens;
Figure 11 is a cross-section taken along line 11-11 of Figure 10;
Figure 12 is a cross-section taken along line 12-12 of Figure 9;
Figure 13 is another embodiment of the bushing;
Figure 14 is a cutaway detail of the bridge and temple hinge attachment of Figure 8;
Figure 15 is a cutaway view similar to Figure 10 but with an 'S' bend in the temple hinge attachment to provide additional support with a lens side notch;
Figure 16 is a perspective view of a further embodiment of a bridge and temple hinge end for insertion into a lens aperture;
Figure 17 is a cutaway view similar to Figure 15 but utilising the bridge and temple hinge ends of Figure 16, with both the inserted end and the bushing mounted through the front of the lens;
Figure 18 is a partial view of an eye glass lens showing the relative positions of the aperture and notch;
Figures 19 to 21 are cutaway side views of a lens showing a first, second and third aperture therethrough;
Figure 22 is a cutaway side view of yet another embodiment of bridge and temple hinge to lens attachment;
Figure 23 is a side detail showing the inserted end of the bridge and temple hinge as shown in Figures 10 and 22;
Figure 24 shows another embodiment of the bushing;
Figure 25 is a cross-section through a further embodiment of the bushing;
Figure 26 is an end view taken along line 26-26 of Figure 25;
Figure 27 is a side detail showing the inserted end of a bridge or temple hinge and having locking ribs; and
Figure 28 depicts an inserted end of a temple hinge having an enlarged conical end protrusion therearound.

### DETAILED DESCRIPTION OF THE PREFERRED EMBODIMENTS

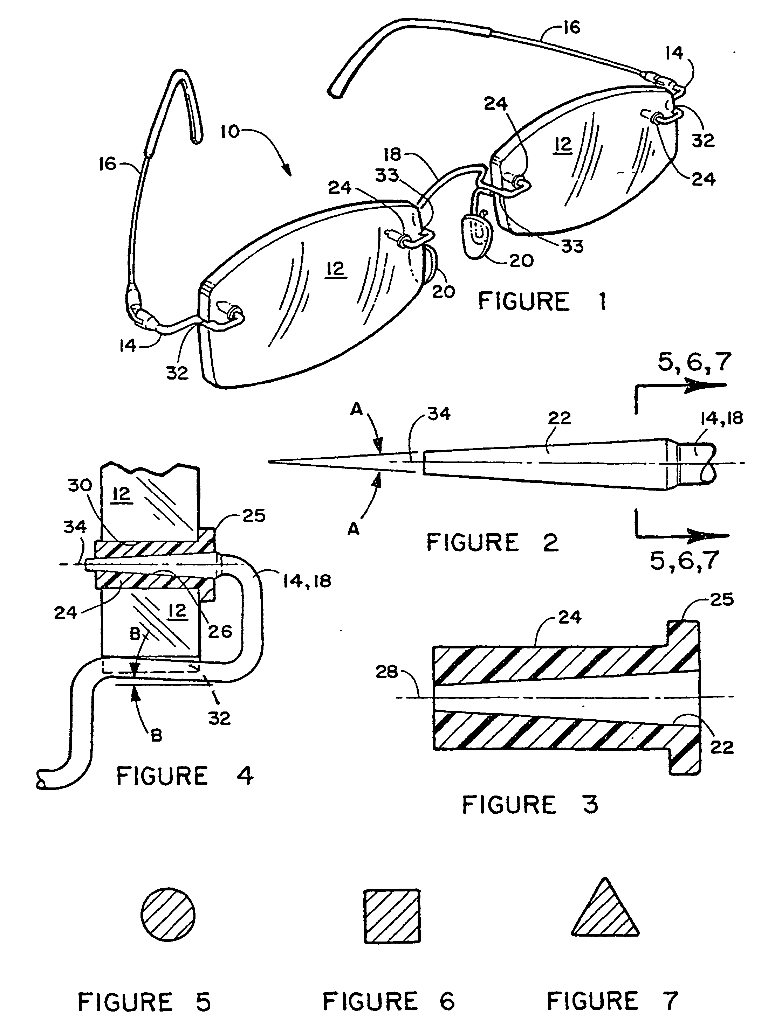

Referring now to drawing Figures 1 to 7, Figure 1 depicts a perspective view of one embodiment of the invention in combination with a pair of rimless eye glasses 10. The eye glasses include lens 12 having a front surface toward the right-hand side of the Figure 1 and the back of the lens is at the left of the figure, temple hinges 14, temple arms 16, bridge 18 and nose pieces 20. The bridge, temple hinge and temple arms may be constructed of any suitable material either plastic or metal with beta titanium being preferable. The nose pieces can be constructed of any suitable material with a soft pliable material being preferable. Referring now specifically to Figure 2, this represents a side view of the inserted end 22 of both the bridge 18 and temple hinge 14. The inserted end is either formed on the end of the bridge or temple hinge or is separately formed and slipped over the end of the material forming the bridge 18 or temple hinge 14 and is fixedly attached thereto by any suitable method such as, but not limited to, soldering, welding adhering or the like.

The cross-section of the inserted end of the bridge and temple hinge may be divergent or convergent and take a number of different configurations such as those shown in Figures 5 to 7. As shown in the Figure 2 configuration that can be any one of the configurations shown in Figures 5 to 7, the taper angle 'A' either converging or diverging toward the tip may vary in a range of slope angles from 1 degree to 45 degrees along the length of the inserted end. Figure 3 depicts a cutaway side view showing a first embodiment of a bushing 24 with a channel 26 through the center axis 28 and a flange or protrusion 25. The channel 26 may be configured substantially the same as the inserted end 22 or either one may have different convergent or divergent slope angle 'A' than the other. The bushing 24 can be constructed of any material suitable for the purpose intended. Like the nose pieces 20, the bushing can be constructed of a formable material such as, by way of example and not intended as a limitation thereto, plastic, natural rubber, gum rubber or the like suitable for the purpose intended. Referring again to Figure 4, there is depicted a partial side cutaway showing end 22 and bushing 24 inserted into the aperture 30 (or 31) through the front of lens 12 with the flange or protrusion 25 positioned against the lens surface. The cross-section of the apertures through the lens 12 in this embodiment may take any one of the various shapes shown in Figures 4 to 7, as fore-mentioned, and the cross-sectional shape as the channel 26 through the bushing and configuration of the end 22 may be alike or have relative different convergent or divergent slope angles. Again referring to Figure 4, the slot 32 (or 33) at each edge of each lens receives a portion of the bridge or temple hinge therein. The center line 34 of the end 22 is not parallel with the portion of the temple hinge engaging the slot 32 and similarly the part of the bridge between each end 22 and nose piece 20 engaged in slot 33 have the same configuration as between 34 and the portion of 14 within the slot 32. The temple hinge portion engaging the slot 32 is formed inward toward the center line 34 of the end 22 at an angle 'B'. This angle at 'B' acts to clamp the temple hinge portion in the slot toward the lens and centreline 34 of the end 22 biasing the end and the temple hinge portion in the slot toward each other, preventing up and down or side movement of the temple hinge or bridge relative to the lens.

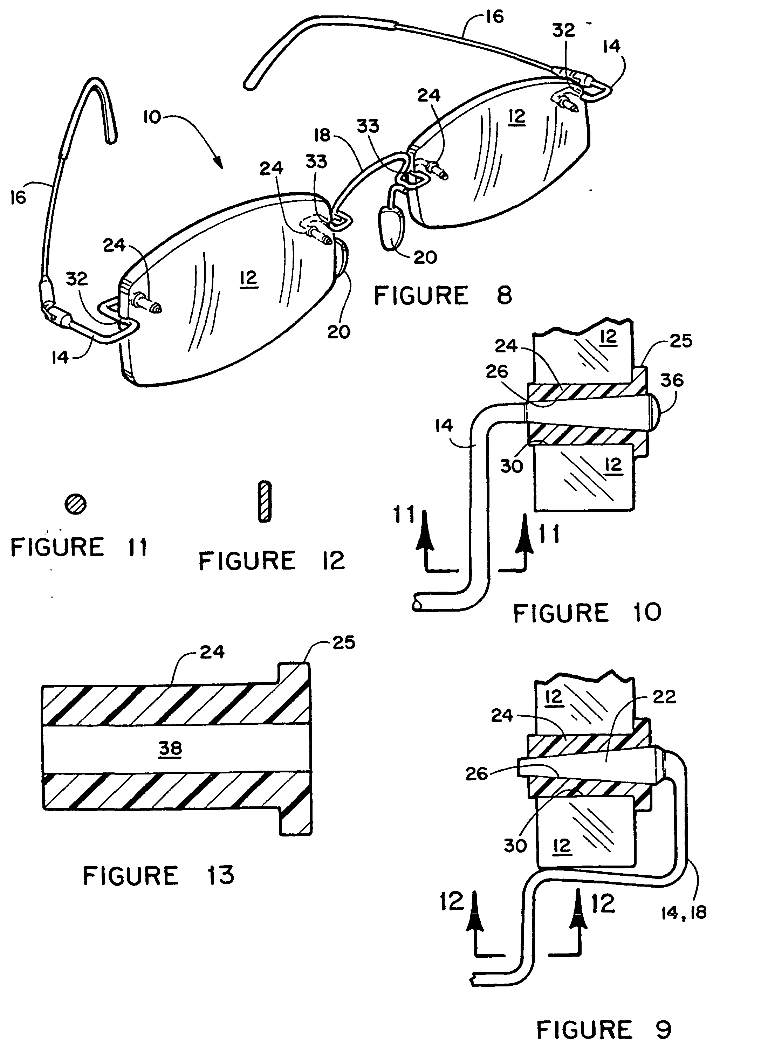

Referring now specifically to Figure 8, this is similar to the drawing and discussion of Figure 1 above except that the inserted ends of the bridge and temple hinges are inserted into the respective aperture 30 from the rear of the lens toward the front of the lens rather than from the front of the lens toward the rear of the lens. The insertion from the rear of the lens toward the front of the lens requires an 'S' form at the inserted end of the temple hinge rather than a 'U' form at the inserted end shown in Figure 1.

Referring now specifically to Figure 9, this depicts a cross-sectional detail of the bridge and temple hinge attachment to the lens generally as depicted in drawing Figure 4 except that there is no notch at the outer lens edge and the bridge and temple hinge are biased between the outer lens edge and the cylindrical aperture 30. The bias is provided in the same manner as previously discussed above in the description of Figure 4.

Referring specifically to Figure 10, this is similar to Figure 9 except that the inserted end of the bridge 18 and temple hinge 14 is attached to the aperture through the lens only and has no bias support at the lens edge. Also, the inserted ends of the bridge and temple hinges are tapered divergently toward the front of the lens 12 rather than convergently toward the front of the lens with the bushing 24 inserted from the front of the lens, and the inserted end has a curved end surface 36.

Figure 11 depicts the cross-sectional configuration of the bridge and temple hinge cross-section at line 11-11 of Figure 10.

Figure 12 depicts the cross-sectional configuration of the bridge and temple hinge cross-section at line 12-12 of Figure 9.

Figure 13 is a second embodiment of the bushing 24 having a non-tapered channel 38 along the longitudinal center line.

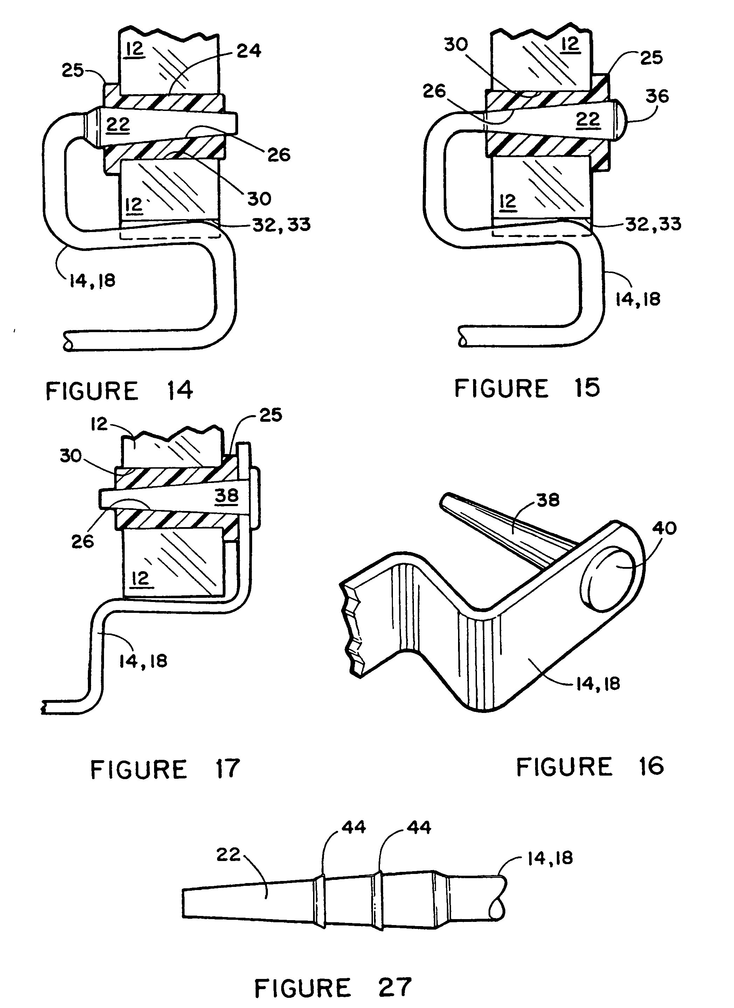

Figure 14 is a cutaway cross-sectional detail of the bridge 18 and temple hinge 14 to lens connection for Figure 8.

Figure 15 shows a back lens 12 connection with 'S' configured bends I the inserted ends of the bridge 18 and the temple hinge connected to the lens in the same manner as that shown in Figure 10.

Figure 16 is a perspective view of the end region of the bridge and temple hinge formed from flat material with the inserted end 38 having its outer end 40 swaged or otherwise fixedly attached to an aperture in the flat material of the bridge and temple hinge.

Figure 17 shows the end region of Figure 16 inserted through the front of a lens 12 in an aperture 26 having a bushing 24 as hereinbefore discussed.

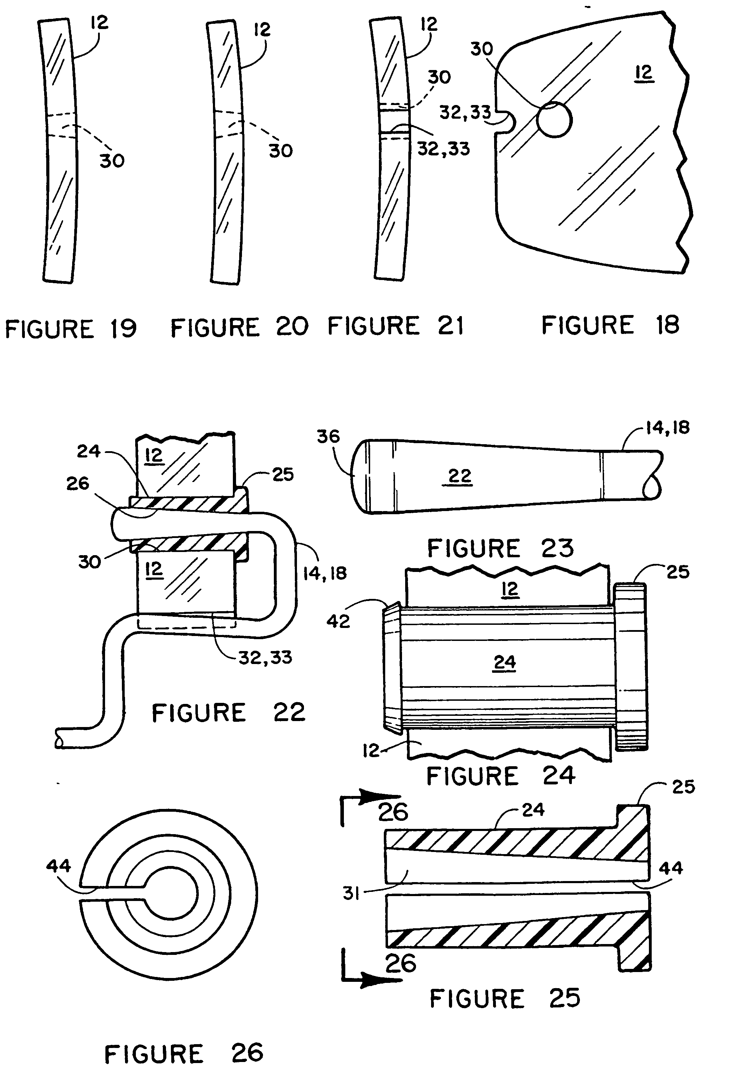

Figure 18 illustrates a part of a lens 12 showing the positional relationship of aperture 30 and notch 32 (or notch 33 not shown in this Figure), being on the opposite side of the lens.

Figures 19 to 21 depict differently-configured apertures 30 through the lens 12. Figure 19 depicts an aperture converging from the front surface toward the rear surface of the lens 12. Figure 20 depicts an aperture diverging from the front surface toward the rear surface of the lens 12. Figure 21 depicts an aperture that is the same cross-sectional configuration from the front surface toward the rear surface of the lens 12.

Figure 22 depicts a cross-section of a second embodiment of a lens with a front-inserted bridge and temple hinge connection in an aperture 30 in the lens, the inserted ends being divergent from the front toward the rear surface of the lens 12.

Figure 23 depicts a detail of the bridge and temple hinge inserted ends as shown in Figures 10 and 22.

Figure 24 depicts a third embodiment of the bushing 24 having a locking flange 42. When installed within aperture 30 of the lens, the bushing is locked into the lens between protrusion 25 and flange 42. This bushing 24 can have any configured channel 26 therethrough.

Figure 25 depicts a fourth embodiment of the bushing 24 having a divergent channel 31 therethrough from the protrusion 25 toward the flange 25. A slit 44 along the sleeve allows for expansion when inserted and compression of the bushing during removal.

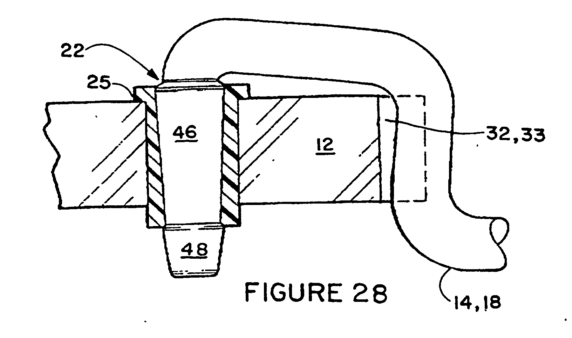

Figure 26 is an end view taken in the direction of line 26-26 showing the slit 44; and Figure 27 shows a bridge or temple hinge end 22 that includes a plurality of locking ribs 44 that have an angled slope on one surface and a right angle surface opposite thereto for allowing easy insertion into the bushing 24 when inserted with the angled slope surface first, the end being resistive to removal after insertion. The ribs also provide some expansion force between the end 22, bushing 24 and aperture 30, increasing locking forces therebetween.

Referring now to Figure 28, the inserted end 22 of the temple hinge and the inserted ends of the bridge not shown (being identical with the inserted end of the temple hinge) have a tapered end with a first taper and an enlarged second taper at the free end thereof. As shown in Figure 28, the temple hinge end (as do the ends of the bridge) has a first taper 46 extending from the temple hinge 14-18 and a second taper 48 at the free end. The second taper 48 provides for ease of insertion into the tapered bushing and resists removal of the temple end (or the bridge ends) from the lens 12 when inserted within the lens aperture 30 through the lens. The second taper 48 may extend through the lens as shown or may terminate within the lens or extemally of the lens surface. It should be noted that the temple hinge need not bear against the outer lens surface to maintain the end of the temple hinge within the lens aperture 30. The notch 32-33 in the outer lens surface shown provides rotational stability to the temple hinge.

The instant invention, as contrasted with the prior art, teaches and claims that a change in shape between a cylinder and a tapered cylinder produces a fundamental change in the behaviour of the system. First, assume that it is desired to press a temple end with a generally cylindrical sleeve thereover into a cylindrical hole of a slightly smaller diameter so as to produce a secure joint. Furthermore, assume that, due to manufacturing tolerances, the diameter of the inserted end of the temple hinge and aperture through the lens will vary in diameter. It follows that if both the frictional holding force required in that joint and the force required to insert the member into the hole will vary widely according to diameter tolerance variations. In contrast, a tapered member described herein inserted into a tapered hole with a known force always produces a consistent holding force regardless of the variations in tolerance of the inserted end of the temple hinge or an aperture through the lens. This feature is a great practical benefit to both the manufacturing and assembly processes, and in fact proves to be elemental in ensuring that the stress in the glass or plastic lens does not rise to a level that produces a failure in the lens material.

It should be understood that although the explanation of the invention has been directed to rimless eye glasses it should be understood that the invention can be employed in rimmed eye glasses where either the bridge or temple hinge is attached directly to the lens rather than the rim.

The foregoing is considered as illustrative only of the principles of the present invention. Further, since numerous modifications and changes will readily occur to those skilled in the art, it is not intended to limit the invention to the exact construction and applications shown and described, and accordingly, all suitable modifications and equivalents may be regarded as falling within the scope of the invention as defined in the appended claims.

## Claims

1. Spectacles comprising two lenses (12) each having two spaced apertures (30,31), two temple hinges (14), a bridge (18) and bushings (24) received in each of the apertures (30,31) of the lenses (12), **characterised in that** said bridge (18) and said temple hinges (14) have tapered ends (22) each received and frictionally ftocked in a respective one of said bushings (24).

2. The spectacles according to claim 1, wherein the tapered ends (22) of the bndge (18) and temple hinges (12) incorporate one or more locking ribs (44).

3. The spectacles according to claim 2, wherein the locking ribs (44) have a smooth tapered surface and a surface forming a right angle with respect to a longitudinal centre line of said tapered end.

4. The spectacles according to any of the preceding claims, wherein said apertures (30,31) through said lenses (12) are cylindrical.

5. The spectacles according to any of claims 1 to 3, wherein said apertures (30,31) through said lenses are rectangular and said bridge (18) and said temple hinges (14) have tapered ends of rectangular cross-section.

6. The spectacles according to any of claims 1 to 3, wherein said apertures (30,31) through said lenses are triangular and said bridge (18) and said temple hinges (14) have tapered ends of triangular cross-section.

7. The spectacles according to any of the preceding claims, wherein said ends of said bridge (18) and said temple hinges (14) are bent formed so that they bear against an outer surface of said lenses (12) when said ends are inserted into said apertures (30,31) thereby placing a biasing tension therebetween.

8. The spectacles according to claim 5, and additionally comprising a notch (32,33) in the outer surface of said lenses (12), wherein each bent formed end is received within a respective notch (32,33) when the end is inserted into an aperture.

9. The spectacles according to any of the preceding claims, wherein each bushing (24) has a first and second end surface and said first end surface includes a protrusion (25).

10. The spectacles according to any of the preceding claims, wherein each bushing (24) has a longitudinal split (44) through a side surface.

11. The spectacles according to any of the preceding claims, wherein said ends of said bridge (18) and said temple hinges (14) have a taper that is selected from a range of 1 to 45 degrees.

12. The spectacles according to claim 1, wherein said ends of said bridge (18) and said temple hinges (14) are formed with a tapered sleeve thereover, said sleeve fixedly attached thereto.

13. The spectacles according to claim 1, wherein said ends of said bridge (18) and temple hinges (14) are inserted into a front surface of said lenses (12) and the adjacent bridge and temple hinge structures are bent formed into an 'S' configuration with a portion of the bent form structure biased against an outer surface of said lenses (12).

14. The spectacles according to claim 13, and further comprising a notch (32,33) in each side of said lenses (12) wherein each said bent form structure is biased against the outer surface of said lenses (12) to be captive in the respective notch.

15. The spectacles according to claim 1, wherein said ends of said bridge (18) and temple hinges (14) are inserted into a back surface of said lenses (12) and the adjacent bridge and temple hinge structures are bent formed into a 'C' configuration with a portion of the bent form structure biased against an outer surface of said lenses (12).

16. The spectacles according to claim 1, wherein said ends of said bridge (18) and said temple hinges (14) comprise a protrusion (48) therearound.

17. The spectacles as defined in claim 16, wherein said protrusion (48) has a diameter greater than the adjacent end of said bridge (18) and temple hinge (14).

18. The spectacles according to claim 16 or claim 17, wherein said protrusion (48) extends beyond said apertures (30,31) through said lenses (24) when said ends of said bridge (18) and said temple hinges (14) are inserted into said apertures (30,31).

19. The spectacles according to any of claims 16 to 18, wherein said protrusion (48) is in the shape of a frusto-conic section.

20. The spectacles according to claim 1, wherein the bushing (24) defines a channel (26) therethrough which tapers from one end to the other.

## Patentansprüche

1. Brille mit zwei Linsen (12), von denen jede zwei auf Abstand zueinander befindliche Locher (30, 31) hat, mit zwei Bügelscharnieren (14), einer Brücke (18) und Hülsen (24), die in jedem der Löcher (30, 31) der Linsen (12) aufgenommen sind, **dadurch gekennzeichnet, dass** die Brücke (18) und die Bügelscharniere sich verjüngende Enden (22) haben, von denen jedes jeweils in einer Hülse (24) aufgenommen und darin kraftschlussig gehalten ist.

2. Brille nach Anspruch 1, wobei die sich verjungenden Enden (22) der Brücke (18) und der Bügelscharniere (12) ein oder mehrere Verriegelungsrippen (44) aufweisen.

3. Brille nach Anspruch 2, wobei die Verriegelungsrippen (44) eine sanft ansteigende Oberfläche und eine Oberfläche haben, die einen rechten Winkel in Bezug auf die Längsmittellinie des sich verjüngenden Endes bildet.

4. Brille nach einem der vorhergehenden Ansprüche, wobei die Löcher (30, 31) durch die Linsen (12) zylindrisch sind.

5. Brille nach einem der Ansprüche 1 bis 3, wobei die Löcher (30, 31) durch die Linsen rechteckig sind und die Brücke (18) und die Bügelscharniere (14) sich verjüngende Enden mit rechteckigem Querschnitt haben.

6. Brille nach einem der Ansprüche 1 bis 3, wobei die Löcher (30, 31) durch die Linsen dreieckig sind und die Brücke (18) und die Bügelscharniere (14) sich verjüngende Enden mit dreieckigem Querschnitt haben.

7. Brille nach einem der vorhergehenden Ansprüche, wobei die Enden der Brücke und der Bügelscharniere (14) gebogen geformt sind, sodass sie an einer außeren Oberflache der Linsen (12) anliegen, wenn die Enden in die Locher (30, 31) eingesetzt sind, wodurch eine Vorspannung dazwischen aufgebaut ist.

8. Brille nach Anspruch 5, zusatzlich mit einer Kerbe (32, 33) in der außeren Oberfläche der Linsen (12), wobei jedes gebogen geformte Ende in einer jeweiligen Kerbe (32, 33) aufgenommen wird, wenn das Ende in ein Loch eingesetzt wird.

9. Brille nach einem der vorhergehenden Ansprüche, wobei jede Hülse (24) eine erste und zweite Endoberfläche hat und die erste Endoberfläche eine Aufweitung (25) umfasst.

10. Brille nach einem der vorhergehenden Ansprüche, wobei jede Hulse (24) einen Längsschlitz (44) durch eine Seitenoberflache aufweist.

11. Brille nach einem der vorhergehenden Ansprüche, wobei die Enden der Brücke (18) und der Bügelscharniere (14) eine Verjüngung haben, die aus einem Bereich von 1 bis 45° ausgewahlt ist.

12. Brille nach Anspruch 1, wobei die Enden der Brücke (18) und der Bügelscharniere (14) mit einer sich verjüngenden Hülse daruber gebildet werden, wobei die Hülse fest damit verbunden ist.

13. Brille nach Anspruch 1, wobei die Enden der Brücke (18) und der Bugelscharniere (14) in eine Vorderfläche der Linsen (12) eingesetzt sind und die benachbarten Brücken- und Bügelscharnierstrukturen gebogen in eine S-Gestaltung geformt sind, wobei ein Bereich der gebogenen Formstruktur unter Vorspannung an einer äußeren Oberfläche der Linsen (12) anliegt.

14. Brille nach Anspruch 13, weiterhin mit einer Kerbe (32, 33) in jeder der Linsen (12), wobei jede gebogene Formstruktur unter Vorspannung gegen eine äußere Oberflache der Linsen (12) anliegt, damit sie in der betreffenden Kerbe fest sitzt.

15. Brille nach Anspruch 1, wobei die Enden der Brücke (18) und der Bügelscharniere (14) in eine hintere Oberfläche der Linsen (12) eingesetzt sind und die benachbarten Brücken-und Bugelscharnierstrukturen in eine C-Gestaltung gebogen geformtsind, wobei ein Bereich der gebogenen Formstruktur unter Vorspannung gegen eine äußere Oberflache der Linsen (12) anliegt.

16. Brille nach Anspruch 1, wobei die Enden der Brücke (18) und der Bugelscharniere (14) einen Vorsprung (48) um sich herum aufweisen.

17. Brille nach Anspruch 16, wobei der Vorsprung (48) einen Durchmesser hat, der großer als der des anschließenden Endes der Brücke (18) und des Bügelscharniers (14) ist.

18. Brille nach Anspruch 16 oder Anspruch 17, wobei der Vorsprung uber die Öffnungen (30, 31) durch die Linse (24) hinaus steht, wenn die Enden der Brücke (18) und der Bügelscharniere (14) in die Löcher (30, 31) eingesetzt sind.

19. Brille nach einem der Ansprüche 16 bis 18, wobei der Vorsprung (48) die Form eines Kegelstumpfabschnittes hat.

20. Brille nach Anspruch 1, wobei die Hülse (24) einen Kanal (26) definiert, der sich von einem Ende zum anderen verjüngt.

## Revendications

1. Lunettes comprenant deux verres (12) chacun ayant deux ouvertures espacées (30,31), deux charnières temporales (14), une arcade (18) et des douilles (24) disposées dans chacune des ouvertures (20,31) des verres (12), **caractérisé en ce que** ladite arcade (18) et lesdites charnières temporales (14) ont des extrémités coniques (22) chacune reçue et bloquée par friction dans une respective desdites douilles (24).

2. Lunettes selon la revendication 1, dans lesquelles les extrémités coniques (22) de l'arcade et des charnières (12) comprennent une ou plusieurs nervures de blocage (44).

3. Lunettes selon la revendication 2, dans lesquelles les nervures de blocage (44) ont une surface conique lisse et une surface formant un angle droit relativement à une ligne de centres longitudinale de ladite extrémité conique.

4. Lunettes selon l'une quelconque des revendications précédentes, dans lesquelles lesdites ouvertures (30,31) à travers lesdits verres (12) sont cylindriques.

5. Lunettes selon l'une quelconque des revendications 1 à 3, dans lesquelles lesdites ouvertures (30,31) à travers lesdits verres sont rectangulaires et ladite arcade (18) et lesdites charnières temporales (14) ont des extrémités coniques de section transversale rectangulaire.

6. Lunettes selon l'une quelconque des revendications 1 à 3, dans lesquelles lesdites ouvertures (30,31) à travers lesdits verres sont triangulaires et ladite arcade (18) et lesdites charnières temporales (14) ont des extrémités coniques de section transversale triangulaire.

7. Lunettes selon l'une quelconque des revendications précédentes, dans lesquelles lesdites extrémités de ladite arcade (18) et desdites charnières (14) sont de forme courbe de façon à ce qu'elles reposent sur une surface extérieure desdits verres (12) lorsque lesdites extrémités sont insérées dans lesdites ouvertures (30,31), y appliquant ainsi une contrainte élastique.

8. Lunettes selon la revendication 5, et comprenant en outre une encoche (32,33) dans la surface extérieure desdits verres (12), lunettes dans lesquelles chaque extrémité de forme courbe est reçue dans une encoche respective (32 ,33) lorsque l'extrémité est insérée dans une ouverture.

9. Lunettes selon l'une quelconque des revendications précédentes, dans lesquelles chaque douille (24) a une première et une seconde surface d'extrémité et ladite première surface d'extrémité comprend une protubérance.

10. Lunettes selon l'une quelconque des revendications précédentes, dans lesquelles chaque douille (24) a une fente longitudinale (44) à travers une surface latérale.

11. Lunettes selon l'une quelconque des revendications précédentes, dans lesquelles lesdites extrémités de ladite arcade (18) et desdites charnières temporales (14) ont une conicité qui est choisie dans un intervalle allant de 1 à 45 degrés.

12. Lunettes selon la revendication 1, dans lesquelles lesdites extrémités de l'arcade (18) et desdites charnières temporales (14) sont formées avec un manchon conique qui les recouvre, ledit manchon y étant attaché fixement.

13. Lunettes selon la revendication 1, dans lesquelles lesdites extrémités de l'arcade (18) et des charnières temporales (14), sont insérées dans une surface frontale desdits verres (12) et les structures adjacentes de l'arcade et de la charnière temporale sont courbées pour former une configuration en ' S', avec une partie de la forme courbe poussée contre une surface extérieure desdits verres.

14. Lunettes selon la revendication 13, et comprenant en outre une encoche (32,33) de chaque côté desdits verres (12), lunettes dans lesquelles chaque extrémité de forme courbe est poussée contre la surface extérieure desdits verres (12) pour être prisonnière dans l'encoche respective.

15. Lunettes selon la revendication 1, dans lesquelles lesdites extrémités de ladite arcade (18) et des charnières temporales (14) sont insérées dans une surface postérieure desdits verres (12) et les structures adjacentes de l'arcade et de la charnière temporale sont courbées pour former une configuration en ' C', avec une partie de la forme courbe poussée contre une surface extérieure desdits verres.

16. Lunettes selon la revendication 1, dans lesquelles lesdites extrémités de ladite arcade (18) et desdites charnières temporales (14) comprennent une protubérance (48) qui les entoure.

17. Lunettes selon la revendication 16, dans lesquelles ladite protubérance (48) a un diamètre supérieur à celui de l'extrémité adjacente desdites arcades (18) et de la charnière temporale (14).

18. Lunettes selon la revendication 16 ou 17, dans lesquelles ladite protubérance (48) s'étend au-delà des ouvertures (30,31) dites dans les verres (24) lorsque lesdites extrémités de ladite arcade (18) et desdites charnières temporales (14) sont insérées dans lesdites ouvertures (30,31).

19. Lunettes selon l'une quelconque des revendication 16 à 18, dans lesquelles ladite protubérance (48) a la forme d'une partie tronconique.

20. Lunettes selon la revendication 1, dans lesquelles les douilles (24) définissent un canal (26) traversant dont la section diminue depuis une extrémité jusqu'à l'autre.
